# EUROPEAN PATENT APPLICATION

(11) **EP 3 225 345 A1**
(43) Date of publication of application: **04.10.2017**
(21) Application number: 17000449.3
(22) Date of filing: 20.03.2017
(51) Int. Cl.: B23K 9/10

(54) **SYSTEM AND METHOD FOR REMOTE CONTROLLED ENGINE DRIVE WELDING POWER SUPPLY**

(30) Priority: 18.03.2016 US 201662310070 P; 22.02.2017 US 201715438841
(71) Applicant: Lincoln Global, Inc., Santa Fe Springs, CA 90670 (US)
(72) Inventor: Stockton, Darren, Jefferson, OH 44047 (US)
(74) Representative: Grosse Schumacher Knauer von Hirschhausen

(57) **Abstract**

A welding system (100) that includes a remote control device and a welding power supply (810) is disclosed. The remote control device includes a user input to select at least a welding mode of the welding system (100) and a transmitter to wirelessly transmit signals representing at least the welding mode. The welding power supply (810) includes a receiver unit and an antenna (220) to wirelessly receive the transmitted signals and a controller to control at least the welding mode in response to the transmitted signals as received.

## Description

The present application claims priority to U.S. Provisional Patent Application No. 62/310,070, filed on March 18, 2016, which is incorporated herein by reference in its entirety.

### FIELD OF THE INVENTION

The invention is related to a welding or cutter system according to claims 1 and 6 and to a remote control device for controlling a welding or cutting system according to claim 11. Devices, systems, and methods consistent with embodiments of the present invention relate to engine drive power supplies, and more specifically, methods and systems to control engine drive power supplies with remote control technology.

### TECHNICAL BACKGROUND

The use of engine drive welding power supplies has increased due to the increased needs for welding in remote areas. As is generally known, engine drive power supplies use a fuel powered engine to power a generator, which generates electrical input power. This electrical power is turned into welding output power and, in many cases, auxiliary power to power tools, etc. Because engine drive power supplies are typically quite large, they are often positioned at a significant distance from the location of the welding and/or are located remote from the welding making access to the power supply inconvenient and difficult. For example, an engine drive welder can be located outside on the ground while the welder is performing a weld inside a large pipe or tank. This makes control of the power supply very difficult, and can often require two persons in communication to control/change settings on the power supply. This can result in an engine drive welder running longer than needed. Thus, a system and method of control is needed to optimize use and control of engine drive welders in remote conditions.

Further limitations and disadvantages of conventional, traditional, and proposed approaches will become apparent to one of skill in the art, through comparison of such approaches with embodiments of the present invention as set forth in the remainder of the present application with reference to the drawings.

### DESCRIPTION

In order to overcome the afore mentioned disadvantages and limitations, especially to optimize the control of the power supply, a welding or cutter system according to claims 1 and 6 is described and a remote control device for controlling a welding or cutting system according to claim 11. Further embodiments are subject of the subclaims. An exemplary embodiment of the present invention is an engine drive power supply which can be controlled remotely by a user. The remote control device allows the user to control the operation of the engine and/or the welding output of the power supply remotely.

In one embodiment, a welding or cutting system includes a remote control device and a power supply. The remote control device includes at least one user input configured to select a welding or cutting mode of the welding or cutting system and a transmitter configured to wirelessly transmit first transmitted signals representing the welding or cutting mode once the welding or cutting mode is selected via the user input. A welding mode of the welding or cutting mode may be one of a stick welding mode, a gas tungsten arc welding mode (GTAW or TIG), a constant voltage gas metal arc welding mode (GMAW), a flux cored arc welding mode (FCAW), a shielded metal arc welding mode (SMAW), a submerged arc welding mode (SAW), or a hardfacing welding mode. The power supply includes power electronics configured to generate welding or cutting output power from electrical input power, an antenna, and a receiver unit configured to wirelessly receive the first transmitted signals via the antenna. The power supply also includes a controller configured to control the welding or cutting mode in response to the first transmitted signals as received. The welding or cutting system may also include a fuel-powered engine/generator configured to generate the electrical input power. The user input may be configured to select at least one of a current, a voltage, or a wire feed speed of the welding or cutting mode. The transmitter may be configured to wirelessly transmit second transmitted signals once at least one of the current, the voltage, or the wire feed speed is selected via the user input. The second transmitted signals represent at least one of the current, the voltage, or the wire feed speed. The receiver unit may be configured to wirelessly receive the second transmitted signals via the antenna, and the controller may be configured to control at least one of the current, the voltage, or the wire feed speed in response to the second transmitted signals as received. The remote control device may be configured to be programmed to limit control to a single power supply. The welding or cutting system may include a cradle mounted to the power supply that is configured to secure the remote control device to the power supply when the remote control device is not being used. The welding or cutting system may include a power charging device mounted to the power supply that is configured to be docked to the power charging device. The power charging device is configured to charge the remote control device when docked to the power charging device. The remote control device may be configured to be secured to an arm of a welder/cutter, a welding gun, or a cutting torch.

In one embodiment, a welding or cutting system includes a remote control device and a power supply. The power supply includes power electronics configured to generate welding or cutting output power from electrical input power and a controller configured to monitor parameters, functions, and settings of the welding or cutting system. The welding or cutting system may include a fuel-powered engine/generator configured to generate the electrical input power. The parameters, functions, and settings may include at least one of a current setting, a voltage setting, an engine/generator setting, an engine/generator status, a current output, a voltage output, or revolutions per minute (RPM) of the engine. The power supply also includes an antenna and a transmitter unit configured to wirelessly transmit first transmitted signals via the antenna. The first transmitted signals represent the parameters, functions, and settings of the welding or cutting system as monitored by the controller. The remote control device includes a receiver unit configured to wirelessly receive the first transmitted signals and a display screen configured to display representations of the parameters, functions, and settings based on the first transmitted signals as received. The remote control device may also include a speaker, a microphone, and an audio transceiver that are configured to support two-way radio communication between a user positioned at the remote control device and another user positioned at the power supply. The power supply may also include a speaker, a microphone, and an audio transceiver that are configured to support two-way radio communication between a user positioned at the remote control device and another user positioned at the power supply. The remote control device may include a controls portion and a repositionable cover configured to protect the controls portion and the display screen of the remote control device from, for example, welding or cutting spatter.

In one embodiment, a remote control device is configured to control a welding or cutting system. The remote control device includes at least one user input configured to select a welding or cutting mode of the welding or cutting system. A welding mode of the welding or cutting mode may be one of a stick welding mode, a gas tungsten arc welding mode (GTAW or TIG), a constant voltage gas metal arc welding mode (GMAW), a flux cored arc welding mode (FCAW), a shielded metal arc welding mode (SMAW), a submerged arc welding mode (SAW), or a hardfacing welding mode. The remote control device also includes a transmitter configured to wirelessly transmit first transmitted signals representing the welding or cutting mode to the welding or cutting system, once the welding or cutting mode is selected via the user input, to control the welding or cutting mode of the welding or cutting system. The remote control device also includes a receiver unit configured to wirelessly receive second transmitted signals transmitted by the welding or cutting system. The second transmitted signals represent parameters, functions, and settings of the welding or cutting system as monitored by the welding or cutting system. The remote control device also includes a display screen configured to display representations of the parameters, functions, and settings based on the second transmitted signals as received. The remote control device may also include a haptic vibration system configured to provide an indication of an issue with the welding or cutting system in response to the second transmitted signals as received. The remote control device may also include an audio output jack configured to couple to headphones to provide an audio warning to a welder or cutter in response to the second transmitted signals as received. The user input may be configured to select at least one of a current, a voltage, or a wire feed speed of the welding or cutting mode. The transmitter may be configured to wirelessly transmit third transmitted signals to the welding or cutting system, once at least one of the current, the voltage, or the wire feed speed is selected via the at least one user input. The third transmitted signals control at least one of the current, the voltage, or the wire feed speed of the welding or cutting mode when received by the welding or cutting system. The remote control device may be configured to be programmed to selectively control multiple power supplies via the user input.

### BRIEF DESCRIPTION OF THE DRAWINGS

The above and/or other aspects of the invention will be more apparent by describing in detail exemplary embodiments of the invention with reference to the accompanying drawings, in which:
FIG. 1 is a diagrammatical representation of an embodiment of an engine drive welding power supply;
FIG. 2 is a diagrammatical representation of a front view of an embodiment of a welding power supply, including an embodiment of a user interface;
FIG. 3 is a diagrammatical representation of an embodiment of an engine drive power supply with a portion of its housing removed;
FIG. 4 is a diagrammatical representation of an embodiment of a wireless remote control device for an embodiment of the present invention;
FIG. 4A is a diagrammatical representation of the wireless remote control device of FIG. 4 showing some internal components of an embodiment of the present invention;
FIG. 5 is a diagrammatical representation of an embodiment of a remote control device mounted to a face of an engine drive power supply;
FIG. 6 is a diagrammatical representation of an embodiment of an arm-mounted remote control device;
FIG. 7 is a diagrammatical representation of an embodiment of a remote control device mounted to a welding gun in accordance with an embodiment of the present invention; and
FIG. 8 is a diagrammatical representation of an embodiment of a plasma cutting system.

### DETAILED DESCRIPTION

Reference will now be made in detail to various and alternative exemplary embodiments and to the accompanying drawings, with like numerals representing substantially identical structural elements. Each example is provided by way of explanation, and not as a limitation. In fact, it will be apparent to those skilled in the art that modifications and variations can be made without departing from the scope or spirit of the disclosure and claims. For instance, features illustrated or described as part of one embodiment may be used on another embodiment to yield a still further embodiment. Thus, it is intended that the present disclosure includes modifications and variations as come within the scope of the appended claims and their equivalents.

Exemplary embodiments described herein are particularly applicable for use in connection with engine drive welding power supplies. Because the structure, function, and operation of these types of engine driven system are well known, a detailed discussion of these systems will not be set forth herein. While exemplary embodiments discussed below are primarily directed to welding systems, embodiments can be used for cutting systems. The focus on welding systems is intended to be exemplary.

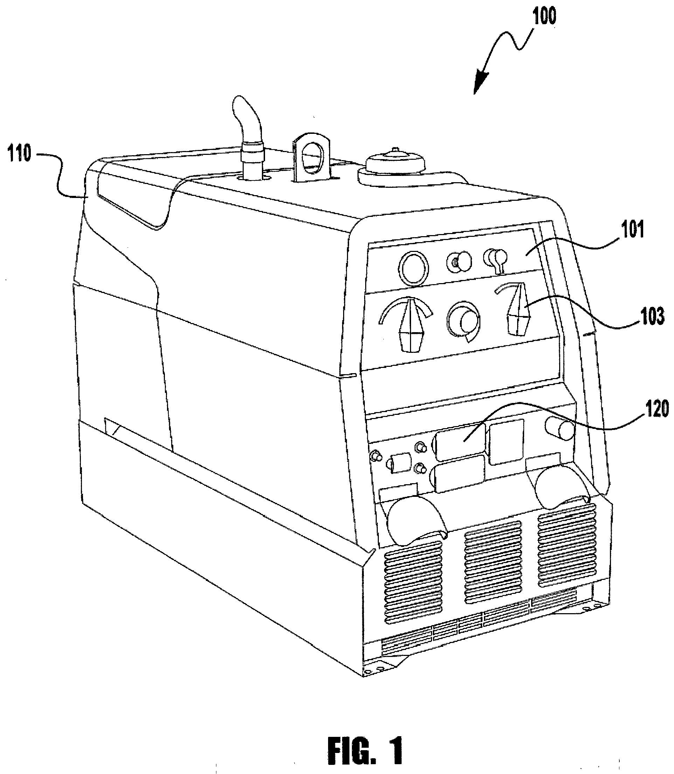

Turning now to Figure 1 (FIG. 1), an exemplary embodiment of an engine driven welder is shown. Of course, the embodiment shown is intended to be merely exemplary and not limiting in any way. As shown, the welder 100 (a.k.a., the welding system or the power supply system) has a housing 110 which encloses the internal components of the welder 100. The welder 100 has a front face 101, on which user input controls 103 are located. The input controls 103 are used to input various operation parameters, monitor system functions, and control the operation of the system 100. Also included on the welder 100 are output outlets 120. The outlets 120 can include connections for welding/cutting cables, auxiliary power outlets providing either 110 VAC or 220 VAC power, or any other type of output power they may be desired to be coupled to the system 100. The general construction, operation and function of hybrid engine drive welders are known and need not be described in detail herein. In some exemplary embodiments, the welder 100 is a hybrid welder having both an engine (a.k.a., engine/generator) and a battery/energy storage device that can provide welding output power as needed.

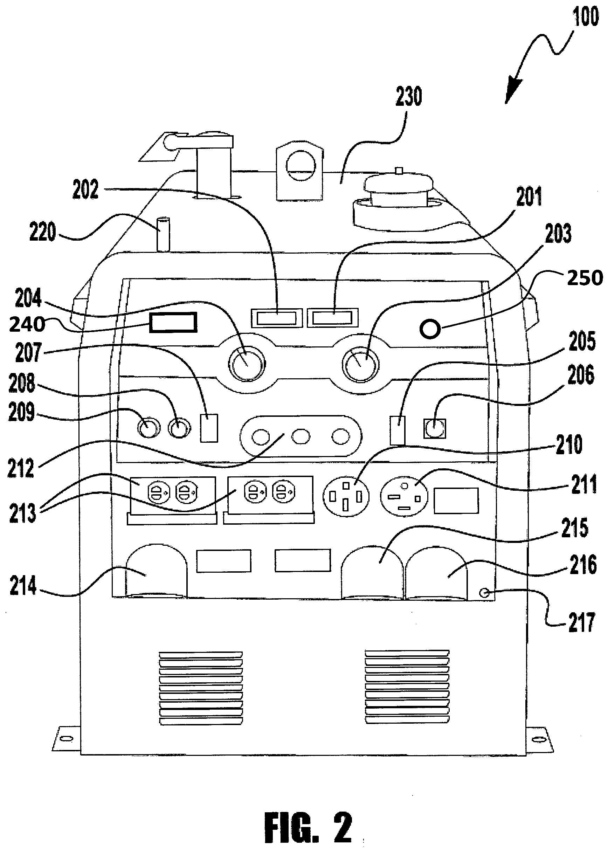

Figure 2 (FIG. 2) is a further exemplary embodiment of the welder 100 in accordance with an embodiment of the present invention. Figure 2 further depicts exemplary controls/components on a front face of an exemplary system. For example, in the embodiment shown, display screens 201 and 202 are used to show information to a user. Screen 201 can be used to show voltage while screen 202 can be used to show amperage. Control knobs 203 and 204 can be used to control aspects of the operation of the system 100. For example, knob 203 can be used to control an output of the welding system to tune the welding arc for a desired operation, and the knob 204 can be used to adjust the output setting of the system 100. A selector switch 205 is provided which allows selection between welding modes. A welding mode may include a stick welding mode, a gas tungsten arc welding mode (GTAW or TIG), a constant voltage gas metal arc welding mode (GMAW), a flux cored arc welding mode (FCAW), a shielded metal arc welding mode (SMAW), a submerged arc welding mode (SAW), or a hardfacing welding mode. Of course other welding modes can be available as well. The system 100 can include a connector 206 that allows connection of optional equipment, such as a cordset remote control. A switch 207 can be used to control engine operation. In exemplary embodiments, the switch 207 can allow for selection between a high engine idle setting - which causes the engine to idle at a high speed to be able to provide welding or auxiliary power as needed, an auto setting - which allows the engine speed to be controlled based on demand, and a stop position - which stops the engine. The control panel can have an engine start switch 208 which starts the engine as needed, and a glow plug push button 209 if the use of glow plugs is needed. The face of the system 100 can also include auxiliary output outlets 210 and 211 which are used to provide auxiliary power. The outlets 210/211 can be either 120/240 volt single phase outlets or 240 volt 3-phase outlets, or a combination thereof as desired. These outlets can be used to power other devices, such as wire feeders or tools. Similarly, dedicated 120 volt single phase outlets 213 can be provided for additional tools/lights, etc. The system 100 can also have an engine dash board/display 212 which shows information related to the engine/generator operation, including, for example, oil pressure, engine temperature, hour meter, fuel level, engine battery voltage, etc. The face of the system 100 also has a positive weld output terminal 214, a negative weld output terminal for a first type of welding 215, and a negative weld output terminal for a second type of welding 216. For example, one terminal 215 can be used for CV welding while the other 216 can be used for stick and TIG welding. Also, a ground stud/terminal 217 can also be provided. Of course, the embodiment shown in Figure 2 is exemplary and other configurations and components can be utilized for the control of the system 100.

As also shown, an antenna 220 can be mounted on the system 100 to allow for wireless communication/control as further described herein. In the embodiment shown, the antenna is mounted to housing 230 of the welder 100. However, in other embodiments, the antenna 220 is secured such that when the housing 230 is opened or removed the antenna 220 is not moved or removed from the welder 100. Further, the antenna 220 can be protected or otherwise housed in a shielding structure (which does not interfere with its operation) to protect the antenna from the elements and damage.

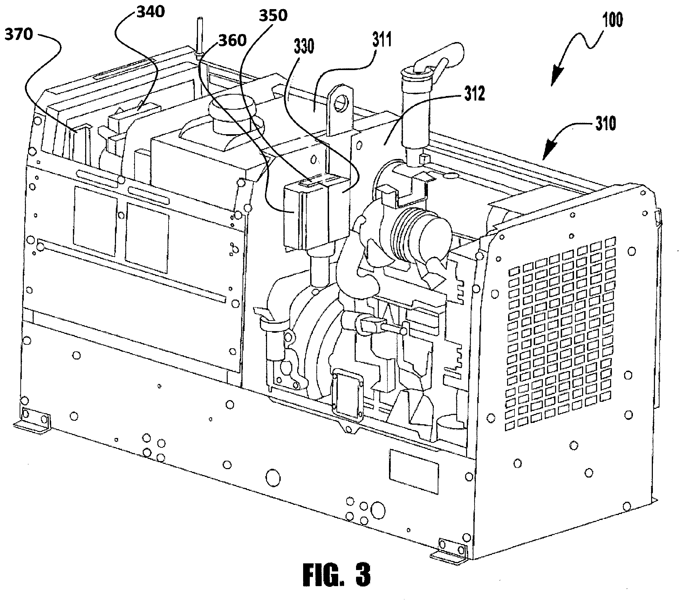

Figure 3 (FIG. 3) depicts an exemplary embodiment of the system 100 with some of its housing 230 removed. A portion of the housing 230 can be removed to allow for easy access to the internal components of the system 100. As shown, the engine/generator 310 is positioned at the back of the system 100 and the fuel tank 311 and welding power electronics 340 are positioned at the front of the system 100 and are separated by a frame component 312. The welding power electronics 340 generates welding output power from the electrical input power generated by the engine/generator 310. The frame component 312 can add structural support as well as insulate the engine compartment from the electronics compartment, and in some embodiments a lift hook can be secured to the frame component to allow for crane lifting of the system 100. Also, in the embodiment shown, a receiver unit 330 is mounted on the frame component 312. The receiver unit 330 receives the signals received by the antenna 220 and transmits those signals to the PC board/controller 350 of the welding system 100. Further, the system 100 includes a transmitter 360 which is coupled to the system controller 350 and transmits information to a remote control device (discussed more fully below). The welding system controller 350 or transmitter 360 are generally known and need not be described in detail. The controller 350 can be any processor based computer device which is capable of controlling the operation of the system 100, and the transmitter 360 can be any known transmitter capable of sending the data required for a given operation. In exemplary embodiments, the controller 350 receives information from the receiver 330 (that have been received via the antenna) and then controls the operation of the system 100 based on those signals. Further, the controller 350 can provide signals to the transmitter 360 which then transmits the data/information to a remote control device (described below) to allow for the user to receive updated information from the system via the remote control device. The transmitter 360, the receiver 330, and the antenna 220 can receive their control/operational power from the battery/power generation of the system 100, similar to the power used to control the other control electronics in the system.

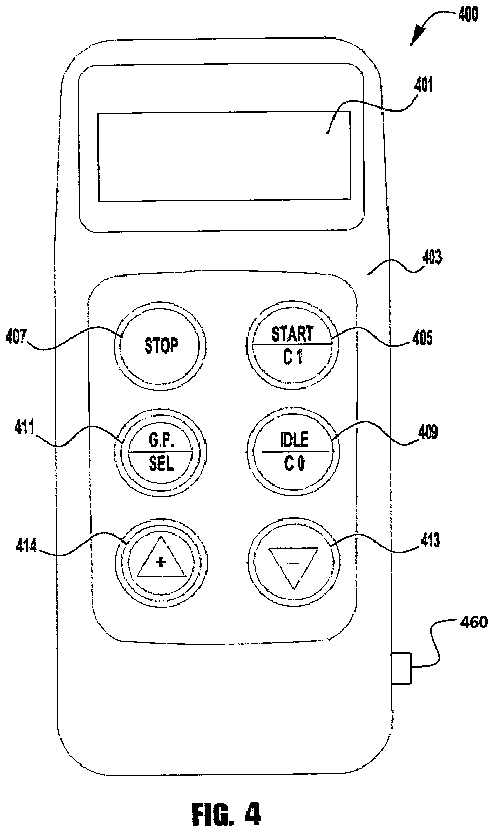

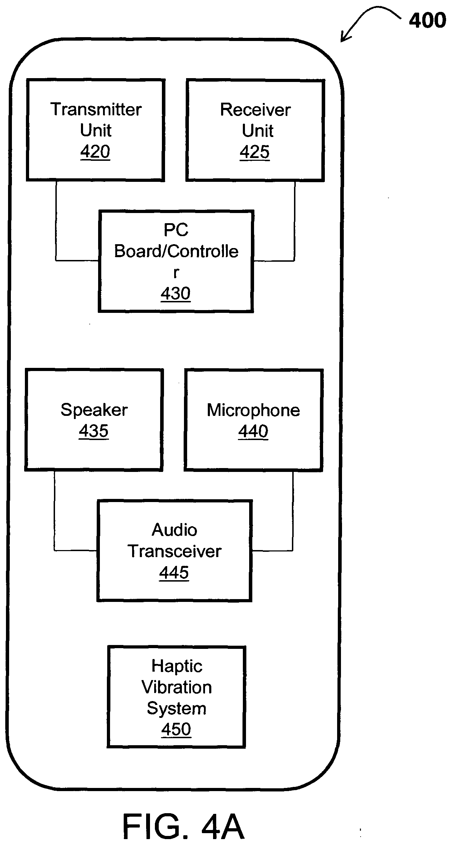

Figure 4 depicts an exemplary transmitter (remote control device) 400 for the system 100. The following discussion will interchangeably refer to the "transmitter 400" or the "remote control device 400" however, it should be noted that the transmitter (remote control device) 400 is also capable of receiving information and is not limited to merely transmitting information. Further, the transmitter 400 can have a PC board/controller capable of implementing the functions described herein. The transmitter device 400 can be a wireless handheld device which has a receiver/transmitter circuit to communicate with the antenna/receiver of the system 100. The transmitter 400 can have a rechargeable battery to provide power. Further, the wireless communication between the transmitter 400 and the receiver 330/system 100 can be facilitated using any known wireless communication protocol. For example, the communication link can be made using a cellular communication network, any known wireless communication network technology, Blue-Tooth, etc. Embodiments of the present invention, are not limited in this regard. Further, in some exemplary embodiments, the transmitter 400 can be programmed such that it is compatible with only a single power supply system 100. In such embodiments, the transmitter 400 can only be used to control a predetermined/preprogrammed system. However, in other exemplary embodiments, the transmitter 400 can be capable of controlling multiple systems. In such embodiments, the transmitter 400 can have a selector switch and/or a switch input to allow the user to select any one of a number of systems 100 to control.

As shown in Figure 4, an exemplary embodiment of the transmitter 400 includes a display screen 401 which displays any desired data, which can include, for example, current or voltage settings, engine settings, engine/system status, system output, including current, voltage, RPMs, etc. The screen 401 can be a LCD type or any other known screen, and is housed in housing 403. In exemplary embodiments, the housing is durable and water resistant to prevent the unit from being compromised in adverse environments. Further, in some embodiments, the housing 403 can be covered with rubber or other durable material to protect from damage/impact shock, etc. Further, the transmitter 400 can have user control inputs 405, 407, 409, 411, 413 and 414. The control inputs can be push buttons, switches, knobs, etc., without departing from the spirit or scope of the present invention. As shown in Figure 4, an input button 405 is used to start the engine/generator 310 of the system 100. In some embodiments, the input 405 could have a time delay function such that the button or switch is required to be held for a predetermined period of time to initiate a start sequence of the motor. For example, a hold time in the range of 2 to 5 seconds can be used. This prevents inadvertent start of the engine. Further, the input 405 could be used to turn on the transmitter 400. Thus in some example, the transmitter 400 can have a "sleep" timer which turns off many of the functions of the transmitter 400 after a period of non-use. In such an embodiment, the user would use the input 405 to turn on the transmitter 400 so that it is ready to send data, and then the user would use the same start input 405 to send an engine start signal to the system 100. In further exemplary embodiments, the transmitter 400 can have an LED or other signal device (not shown) which indicates that the engine/generator 310 has started. For example, the input device 405 can glow green - using back lighting, etc. - (or any other color) to indicate that the engine has started and the system 100 is running normally. Some embodiments can use of a separate LED or others can use an indicator in the input 405 itself. Of course, other color indications can also be used to indicate any anomalies with the system 100. For example, a color yellow can be used to indicate that something is wrong with the system, such as low fuel, improper engine operation, etc. While not shown, the transmitter 400 can also have a separate input for turning on the glow plugs of the system 100. In other embodiments, the input 405 can be used to turn on the glow plugs similar to that described above. For example, if the user holds the input 405 for a fixed period of time the glow plugs turn on.

A separate input device 407 can be used to stop the engine/generator 310. This can help save fuel, perform engine maintenance, and otherwise extend the life of the system 100. In prior systems it is often required to turn off the engine at the user interface of the system 100. Thus, in prior systems the engine is often left running at idle, even when not used for welding. In some exemplary embodiments, the system 100 monitors the auxiliary power draw via the auxiliary power outlets (described above) and if the auxiliary power draw is above some predetermined level the system 100 will not turn off with the activation of the input 407. That is, in some embodiments, if the auxiliary power draw is above a certain level it can indicate that there are auxiliary devices connected which are in operation and, if the engine is shut off, the power to these devices would stop. In such embodiments, the transmitter 400 can provide an indication to the user that an engine stop would also shut off power to these devices, thus giving the user the choice to leave the engine on or continue to shut it off. For example, if a user presses the input 407 once, and the auxiliary power draw is above a predetermined threshold, the input 407 can blink red (or otherwise provide an indication) to indicate that auxiliary power is being used. After signaling that auxiliary power is being used, the user can then leave the engine running, or press the input 407 again (again a time delay can be used) to shut off the engine. This improves the flexibility of control of the system 100 from a remote location. Of course, the display 401 can be used to display any needed information during start up and/or shut down.

The input 409 can be used to control the idle speed of the engine/generator 310. For example, when the input 409 is used, the engine can go to a first idle mode (low idle) and if pressed again, can go to a second idle mode (high idle). Again, the input 409 can use backlighting, or some other methodology to indicate the idle setting. For example, green can indicate high idle while yellow indicates low idle. Also, the display can be used to display this information. Similarly, the input 411 can be used to control the welding mode for the system 100. For example, the input can be used to cycle through the different possible operation modes (e.g., stick, TIG, CV wire, etc.). That is, if the input is depressed once within a period of time (e.g., 1 second) a first mode is selected, if depressed twice a second mode, etc. Of course other methodologies can be used to cycle through settings, and again color illumination (e.g., a different color for each setting) can indicate to the user which mode of operation is selected. The input 411 (or another input) can also be used to change output settings of the system 100, including current and/or voltage. In some embodiments, the user can adjust the output using actual output voltage and/or current values or can adjust based on a percentage of a preset output of the system (e.g. 60%, etc.) The transmitter 400 will allow for a user to select their desired control methodology.

That is, the inputs 413 and 414 can be used to adjust settings up or down as needed. The inputs can also be used to scroll through options that can be displayed on the display 401. For example, in one exemplary embodiment, the user can use the input 411 to indicate that a desired mode change is requested, and then the user uses the inputs 413/414 to scroll through the options. Additionally/alternatively, once the user selects a mode of operation the user can then use the inputs 413/414 to select desired settings for a given operation, including current, voltage, wire feed speed, etc. In some embodiments, the idle speed (for either high or low idle setting) of the engine can be adjusted using the inputs 413/414. Of course, the above described embodiments are intended to be exemplary and any combination of inputs can be used to control the operation of the system remotely and wirelessly. Further, the remote can be used to control/monitor any aspect of the system 100. Of course, the embodiment shown in Figure 4 is intended to be exemplary and other combinations/configurations of input switches/buttons/displays can be used.

In exemplary embodiments, the control knobs 203/204, for example, on the face of the system 100 will be coupled to servos, motors or other types of motion control devices, that will move/rotate the knobs based on control inputs from the transmitter 400. Thus, if a user selects a current level for stick welding via the remote, the input controls on the face of the system 100 will be physically moved/changed to the corresponding settings to ensure the various controls coincide with the operation of the system 100. In such embodiments a visual inspection of the system 100 will allow for one to determine the settings of the system 100 without the need for looking at the settings on the transmitter 400.

FIG. 4A is a diagrammatical representation of the exemplary wireless remote control device 400 of FIG. 4 showing some internal components of an embodiment of the present invention. In one embodiment, the remote control device 400 includes a transmitter unit 420 configured to wirelessly transmit signals representing a selected welding mode once the welding mode is selected via a user input (e.g., input 411). In one embodiment, the transmitter unit 420 is configured to wirelessly transmit signals representing a selected welding current, a selected welding voltage, or a selected wire feed speed. The transmitter unit 420 may be configured to transmit signals representing other parameters as well, in accordance with other embodiments. For example, the remote control device 400 may be used to select and/or control other parameters via transmitted signals. For example, such other parameters may include hot start, stick-out, arc force, inductance, and starting/ending parameters which are well known in the art.

In one embodiment, the remote control device 400 includes a receiver unit 425 configured to wirelessly receive transmitted signals from the system 100. The transmitted signals may represent parameters, functions, and settings of the system 100 that are monitored by the system 100, in accordance with one embodiment. Representations of such parameters, functions, and settings of the system 100 may be displayed on display screen 401 based on the transmitted signals as received. The parameters, functions, and settings may include, for example, a current setting, a voltage setting, an engine/generator setting, an engine/generator status, a current output, a voltage output, or revolutions per minute (RPM) of the engine. In one embodiment, the remote control device 400 includes a PC board/controller 430 configured to facilitate implementation of the functions of the remote control device 400 described herein. The receiver unit 425 may be configured to receive signals representing other parameters as well, in accordance with other embodiments.

In a further exemplary embodiment, the transmitter 400 can have a shortwave communication ability. For example, the transmitter 400 can have a speaker 435, a microphone 440, and an audio transmitter/receiver (transceiver) 445 similar to that used in short wave, two-way radio communication to communicate with another user positioned near the system 100. The system 100 can also have a speaker 240, a microphone 250, and an audio transceiver 370 to allow someone positioned near the system 100 to communicate with the welder at the remote control device 400. In accordance with one embodiment, particular elements of the remote control device 400, as described herein, may be integrated into a welding or cutting helmet to provide the functionality described herein.

In one embodiment, the controller 350 of the system 100 is configured to control a welding mode of the system 100 in response to the receiver unit 330 of the system 100 receiving transmitted signals from the remote control device 400 that are presentative of a selected welding mode. In another embodiment, the controller 350 of the system 100 is configured to control a welding current, a welding voltage, or a wire feed speed of the system 100 in response to the receiver unit 330 of the system 100 receiving transmitted signals from the remote control device 400 that are representative of a selected welding current, a selected welding voltage, or a selected wire feed speed.

In one embodiment, the controller 350 of the system 100 is configured to monitor parameters, functions, and settings of the system 100. The transmitter unit 360 of the system 100 is configured to wirelessly transmit signals (that represent the parameters, functions, and settings of the system 100 as monitored) via the antenna 220 to the remote control device 400.

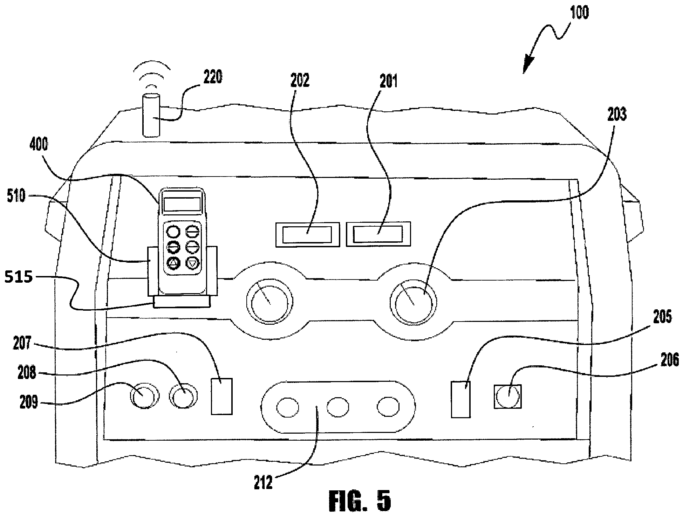

Figure 5, depicts an embodiment, where the face of the system 100 includes a mounting bracket/cradle 510 to secure the transmitter 400 when the transmitter 400 is not being used at a welding operation. The mounting bracket 510 can be configured in any desired way to hold the transmitter 400 and does not have to be located on the face of the system 100. Further, the mounting bracket 510 can include a power charging device 515 which allows the transmitter 400 to be charged when the transmitter 400 is docked. For example, in some embodiments, the transmitter 400 can provide a visual (or other) indication when its power source (e.g., battery) is low. At that time the user can dock the remote to allow it to charge as needed. The transmitter 400 and/or the face of the system 100 can have a visual indication to provide the status of the charge on the transmitter 400. For example, a series of colored LEDs can be used to indicate the charge level. When the LEDs are green the remote is fully charged, and when they are red the charge is low. Of course other colors can be used.

In additional embodiments, the transmitter 400 can be equipment with a magnet on a surface of its housing 403 so that the remote can be magnetically mounted to the system 100, the housing 230, or any ferrous metal surface (e.g., a workpiece.)

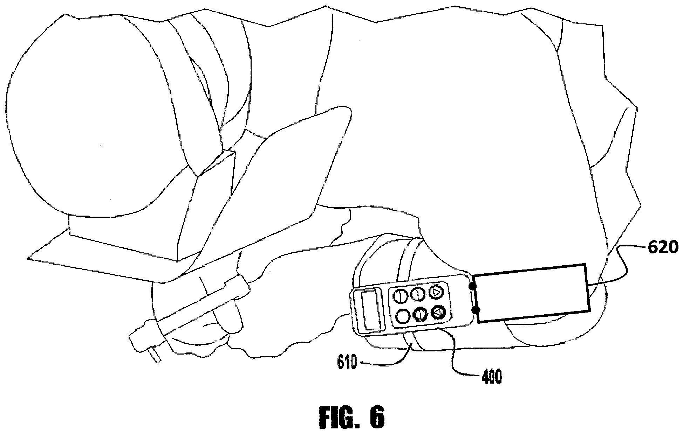

Figure 6 depicts an exemplary welding operation, where the transmitter 400 is secured to the welder via a strap 610, or any other device. This allows the welder to secure the transmitter 400 so that it is not lost or misplaced and allows the user easy access when needed. Of course, if the transmitter 400 is able to be positioned on a user near the welding operation (e.g., on the forearm, etc.) the transmitter 400 should have sufficient protection from the heat of the welding operation. In some exemplary embodiments, the remote can have a repositionable cover 620 (e.g., a flip up cover) that protects the controls/display from welding spatter, etc. To use the transmitter 400 the user would flip up the cover to gain access to the controls/display.

In some exemplary embodiments, the transmitter 400 can be equipped with a haptic vibration system 450 (motor, controller, etc.) which provides an indication of an issue with the welding operation. For example, the system 100 can communicate to the transmitter 400 that the fuel level is low, or any other issue with the performance/output of the system 100, and trigger the use of the haptic vibration system 450. When the user senses the vibration of the transmitter 400 the user is aware that there is an issue with the system and can stop welding at an appropriate point to determine the issue - which can be displayed on the display of the remote control device 400.

In some exemplary embodiments, the transmitter 400 can have an audio output jack 460 to which a user can couple headphones so that an audio warning can be provided during welding as needed. For example, an audio warning of "Fuel level low" can be provided to the welder while welding. Of course, any other audio warning or information can be provided as well.

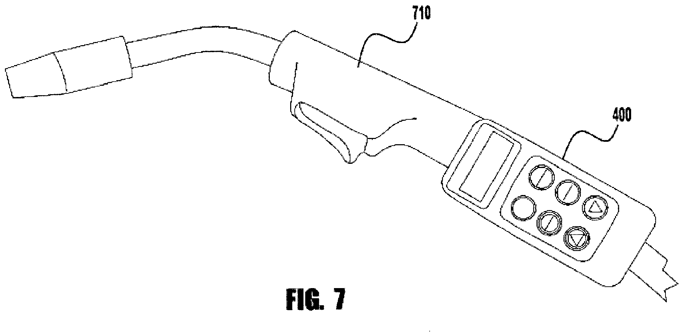

Figure 7 depicts an exemplary weld gun 710 which has a bracket (not shown) to which the transmitter 400 can be mounted. Again, this bracket can be used to aid in preventing loss of the transmitter 400. The bracket should be positioned such that it does not interfere with welding. In further exemplary embodiments, the torch bracket can also have a charging circuit such that when the transmitter 400 is mounted to the torch the remote can charge its battery. In some exemplary embodiments, the transmitter 400 can stay attached during welding, while in others it should be removed.

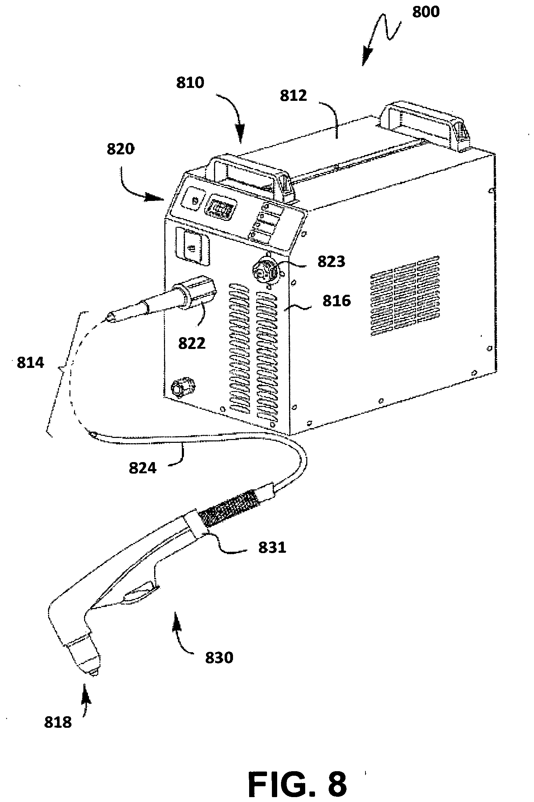

As state previously herein, while exemplary embodiments discussed herein are primarily directed to welding systems, embodiments can be used for cutting systems. FIG. 8 is a diagrammatical representation of an embodiment of a plasma cutting system 800. The system 800 contains a power supply 810 which includes a housing 812 with a connected torch assembly 814. Housing 812 includes the various conventional components for controlling a plasma arc torch, such as a power supply, a plasma starting circuit, air regulators, fuses, transistors, input and output electrical and gas connectors, controllers and circuit boards, etc. Torch assembly 814 is attached to a front side 816 of the housing 812. Torch assembly 814 includes within it electrical connectors to connect an electrode and a nozzle within the torch end 818 to electrical connectors within the housing 812. Separate electrical pathways may be provided for a pilot arc and a working arc, with switching elements provided within the housing 812. A gas conduit is also present within the torch assembly to transfer the gas that becomes the plasma arc to the torch tip. Various user input devices 820 such as buttons, switches and/or dials may be provided on the housing 812, along with various electrical and gas connectors.

It should be understood that the housing 812 illustrated in FIG. 8 is but a single example of a plasma arc torch device that could employ aspects of the inventive concepts disclosed herein. Accordingly, the general disclosure and description above should not be considered limiting in any way as to the types or sizes of plasma arc torch devices that could employ the disclosed torch elements.

As shown in FIG. 8, the torch assembly 814 includes a connector 822 at one end for attaching to a mating connector 823 of the housing 812. When connected in such a way, the various electrical and gas passageways through the hose portion 824 of the torch assembly 814 are connected so as to place the relevant portions of the torch 830 in connection with the relevant portions within the housing 812. The torch 830 shown in FIG. 8 has a connector 831 and is of the handheld type, but as explained above the torch 830 can be of the mechanized type. The general construction of the torch 830, such as the handle, trigger, etc. can be similar to that of known torch constructions, and need not be described in detail herein. However, within the torch end 818 are the components of the torch 830 that facilitate the generation and maintenance of the arc for cutting purposes. Specifically, the some of the components include the torch electrode, nozzle, shield, and swirl ring.

While the disclosed subject matter of the present application has been described with reference to certain embodiments, it will be understood by those skilled in the art that various changes may be made and equivalents may be substituted without departing from the scope of the claimed subject matter. In addition, many modifications may be made to adapt a particular situation or material to the teachings of the described subject matter without departing from its scope. Therefore, it is intended that the described subject matter not be limited to the particular embodiment disclosed, but that the disclosed subject matter will include all embodiments falling within the scope of the present specification.

**Reference numbers**

| | | | |
|---|---|---|---|
| 100 | welder | 310 | engine/ generator |
| 101 | front face | 311 | fuel tank |
| 103 | input control | 312 | component |
| 110 | housing | 330 | unit/ receiver |
| 120 | output outlet | 340 | welding power electronic |
| 201 | display screen | 350 | board/controller |
| 202 | display screen | 360 | transmitter |
| 203 | knob | 370 | transceiver |
| 204 | knob | 400 | transmitter |
| 205 | switch | 401 | screen |
| 206 | connector | 403 | housing |
| 207 | switch | 405 | input |
| 208 | switch | 407 | input |
| 209 | button | 409 | input |
| 210 | output outlet | 411 | input |
| 211 | output outlet | 413 | input |
| 212 | board/ display | 414 | input |
| 213 | outlet | 420 | unit |
| 214 | terminal | 425 | unit |
| 215 | terminal | 430 | board/ controller |
| 216 | welding | 435 | speaker |
| 217 | terminal | 440 | microphone |
| 220 | antenna | 445 | transceiver |
| 230 | housing | 450 | system |
| 240 | speaker | 460 | output jack |
| 250 | microphone | 510 | bracket/ cradle |
| 515 | device | 818 | torch end |
| 610 | strap | 820 | input device |
| 620 | cover | 822 | connector |
| 710 | weld gun | 823 | connector |
| 800 | system | 824 | hose portion |
| 810 | power supply | 830 | torch |
| 812 | housing | 831 | connector |
| 814 | torch assembly | | |
| 816 | front side | | |

## Claims

1. A welding or cutting system (100, 800), comprising:
a remote control device having:
at least one user input configured to select a welding or cutting mode of the welding or cutting system (100, 800), and
a transmitter configured to wirelessly transmit first transmitted signals representing the welding or cutting mode once the welding or cutting mode is selected via the at least one user input; and
a power supply (810) having:
power electronics configured to generate welding or cutting output power from electrical input power,
an antenna (220),
a receiver unit (330) configured to wirelessly receive the first transmitted signals via the antenna (220), and
a controller (350) configured to control the welding or cutting mode in response to the first transmitted signals as received.

2. The welding or cutting system (100, 800) of claim 1, wherein:
the at least one user input is configured to select at least one of a current, a voltage, or a wire feed speed of the welding or cutting mode;
the transmitter is configured to wirelessly transmit second transmitted signals, once at least one of the current, the voltage, or the wire feed speed is selected via the at least one user input, wherein the second transmitted signals represent at least one of the current, the voltage, or the wire feed speed;
the receiver unit is configured to wirelessly receive the second transmitted signals via the antenna (220); and
the controller (350) is configured to control at least one of the current, the voltage, or the wire feed speed in response to the second transmitted signals as received.

3. The welding or cutting system (100, 800) of claim 1 or 2, further comprising a cradle (510) mounted to the power supply (810), wherein the cradle is configured to secure the remote control device to the power supply (810) when the remote control device is not being used.

4. The welding or cutting system (100, 800) of any of the claims 1 to 3, further comprising a power charging device mounted to the power supply (810), wherein the remote control device is configured to be docked to the power charging device, and wherein the power charging device is configured to charge the remote control device when docked to the power charging device.

5. The welding or cutting system (100, 800) of any of the claims 1 to 5, wherein the remote control device is configured to be secured to at least one of an arm of a welder or cutter, a welding gun (710), or a cutting torch, and/or wherein the remote control device is configured to be programmed to limit control compatibility to the power supply (810).

6. A welding or cutting system (100, 800), comprising:
a power supply having:
power electronics configured to generate welding or cutting output power from electrical input power,
a controller configured to monitor parameters, functions, and settings of the welding or cutting system (100, 800),
an antenna (220), and
a transmitter unit configured to wirelessly transmit first transmitted signals via the antenna (220), wherein the first transmitted signals represent the parameters, functions, and settings of the welding or cutting system as monitored by the controller; and
a remote control device having:
a receiver (350) unit configured to wirelessly receive the first transmitted signals, and
a display screen (401) configured to display representations of the parameters, functions, and settings based on the first transmitted signals as received.

7. The welding or cutting system (100, 800) of any of the claims 1 to 6, wherein the remote control device includes:
a speaker (435);
a microphone (440); and
an audio transceiver (445),
wherein the speaker (435), the microphone (440), and the audio transceiver (445) are configured to support two-way radio communication between a first user positioned at the remote control device and a second user positioned at the power supply (810), and/or
wherein the speaker (435), the microphone (440), and the audio transceiver (445) are configured to support two-way radio communication between a first user positioned at the power supply (810) and a second user positioned at the remote control device.

8. The welding or cutting system (100, 800) of any of the claims 1 to 7, wherein the remote control device includes:
a controls portion; and
a repositionable cover configured to protect at least the controls portion and the display screen of the remote control device from at least welding or cutting spatter.

9. The welding or cutting system (100, 800) of any of the claims 1 to8, further comprising a fuel-powered engine/generator configured to generate the electrical input power.

10. The welding or cutting system (100, 800) of any of the claims 1 to 9, wherein the parameters, functions, and settings include at least one of a current setting, a voltage setting, an engine/generator setting, an engine/generator status, a current output, a voltage output, or revolutions per minute (RPM) of the engine.

11. A remote control device for controlling a welding or cutting system, the remote control device comprising:
at least one user input configured to select a welding or cutting mode of the welding or cutting system (100, 800);
a transmitter configured to wirelessly transmit first transmitted signals representing the welding or cutting mode to the welding or cutting system, once the welding or cutting mode is selected via the at least one user input, to control the welding or cutting mode of the welding or cutting system;
a receiver unit (350) configured to wirelessly receive second transmitted signals transmitted by the welding or cutting system, wherein the second transmitted signals represent parameters, functions, and settings of the welding or cutting system as monitored by the welding or cutting system; and
a display screen (401) configured to display representations of the parameters, functions, and settings based on the second transmitted signals as received.

12. The remote control device of claim 11, further comprising a haptic vibration system configured to provide an indication of an issue with the welding or cutting system in response to the second transmitted signals as received, and/or
further comprising an audio output jack configured to couple to headphones to provide an audio warning to a welder or a cutter in response to the second transmitted signals as received.

13. The remote control device of claim 11 or 12, wherein:
the at least one user input is configured to select at least one of a current, a voltage, or a wire feed speed of the welding or cutting mode; and
the transmitter is configured to wirelessly transmit third transmitted signals to the welding or cutting system, once at least one of the current, the voltage, or the wire feed speed is selected via the at least one user input, wherein the third transmitted signals control at least one of the current, the voltage, or the wire feed speed of the welding or cutting mode when received by the welding or cutting system.

14. The remote control device of any of the claims 11 to 13, wherein the remote control device is configured to be programmed to selectively control multiple power supplies via the at least one user input.

15. The remote control device of any of the claims 11 to 14, wherein a welding mode of the welding or cutting mode is one of a stick welding mode, a gas tungsten arc welding mode (GTAW or TIG), a constant voltage gas metal arc welding mode (GMAW), a flux cored arc welding mode (FCAW), a shielded metal arc welding mode (SMAW), a submerged arc welding mode (SAW), or a hardfacing welding mode.
